Europäisches Patentamt

(19) European Patent Office

Office européen des brevets

(11) Numéro de publication: **0 087 344**
**B1**

(12) **FASCICULE DE BREVET EUROPÉEN**

(45) Date de publication du fascicule du brevet:
26.11.86

(51) Int. Cl.⁴: **C 08 L 23/06**

(21) Numéro de dépôt: **83400256.0**

(22) Date de dépôt: **07.02.83**

(54) **Compositions de polyéthylènes de haute ou moyenne densité extrudables et réticulables.**

(30) Priorité: **18.02.82 FR 8202835**

(43) Date de publication de la demande:
**31.08.83 Bulletin 83/35**

(45) Mention de la délivrance du brevet:
**26.11.86 Bulletin 86/48**

(84) Etats contractants désignés:
**BE CH DE GB IT LI NL SE**

(56) Documents cité:
**FR-A-1 207 825**
**GB-A-2 063 887**
**US-A-3 489 824**
**US-A-3 911 051**

(73) Titulaire: **INSTITUT FRANCAIS DU PETROLE, 4, Avenue de Bois- Préau, F-92502 Rueil- Malmaison (FR)**

(72) Inventeur: **Bergault, Anne- Marie, 16, avenue Bocquet, F-92700 Colombes (FR)**
Inventeur: **Bonavent, Gérard, Décédé (FR)**
Inventeur: **Jarrin, Jacques, 56, rue du Point du Jour, F-92100 Boulogne (FR)**
Inventeur: **Mollard, Marc, 24, rue des Erables, F-78360 Montesson (FR)**

LIBER, STOCKHOLM 1986

EP 0 087 344 B1

## Description

La présente invention concerne une composition de polyéthylène haute densité ou moyenne densité extrudable et réticulable. Elle concerne aussi le procédé de préparation d'objets extrudés et réticulés mis en oeuvre, ainsi que les objets obtenus eux-mêmes.

On sait que la réticulation des polyéthylènes haute densité ou moyenne densité (qui peut être effectuée par un processus radicalaire initié par un composé générateur de radicaux libres) permet d'améliorer certaines de leurs propriétés, notamment leurs propriétés mécaniques et leur résistance à la chaleur.

On sait d'autre part qu'il est possible de mettre en forme par frittage les polyéthylènes haute densité ou moyenne densité (réticulables par réaction radicalaire). Cependant, les procédés de frittage usuels nécessitent l'emploi d'un appareillage spécifique et la mise en oeuvre de pressions élevées. (A cet égard, on peut se référer par exemple à FR-A-2 383 006 ).

Si l'on désire réaliser la mise en forme des polyéthylènes par extrusion en appareillage classique, on se heurte à certaines difficultés.

D'une part, comme la réticulation des polyéthylènes haute densité par générateurs de radicaux libres effectuée après l'étape de mise en forme (extrusion), nécessite le réchauffement de la matière à réticuler jusqu'à la température de décomposition du composé générateur de radicaux, il est nécessaire, pour éviter la déformation du produit formé, d'utiliser des polyéthylènes haute densité de masses moléculaires élevées.

D'autre part, de tels polyéthylènes ne peuvent être extrudés avec des débits satisfaisants qu'à des températures élevées dont la mise en oeuvre provoque, dès l'étape d'extrusion, la décomposition des générateurs de radicaux libres usuels.

On connait aussi divers agents plastifiants des polyéthylènes haute densité (voir par exemple "The technology of solvents and plasticizers" d'Arthur K. DOOLITTLE-John WILEY & SONS - New York) qui peuvent être utilisés en présence d'un initiateur de réactions radicalaires tel qu'un peroxyde, aux températures nécessaires à la mise en oeuvre de la matière (extrusion par exemple). Des agents plastifiants peuvent être des esters tels que, par exemple, des acrylates et des méthacrylates d'alkyle.

Cependant, ces agents plastifiants présentent deux inconvénients majeurs.

D'une part, ils sont le plus souvent réactifs dans l'intervalle des températures mises en oeuvre lors de l'extrusion, ce qui a pour effet d'amorcer la réticulation dès l'étape d'extrusion dont le déroulement se trouve perturbé.

D'autre part, ils exercent un effet plastifiant insuffisant si on les utilise aux concentrations qui permettent de conserver aux produits réticulés finaux des propriétés satisfaisantes.

Sinon, le taux de gel des produits après réticulation se trouve souvent sensiblement réduit.

On a maintenant découvert qu'il était possible de réaliser des compositions de polyéthylènes haute densité ou moyenne densité extrudables et réticulables dans des conditions satisfaisantes, en incorporant aux polyéthylènes un additif réactif de mise en oeuvre permettant la plastification des polyéthylènes à des températures d'extrusion compatibles avec les générateurs de radicaux libres (c'est-à-dire assez modérées pour éviter la décomposition du générateur de radicaux libres pendant l'extrusion).

Les additifs incorporés aux polyéthylènes présentent l'avantage supplémentaire de participer à la réticulation ultérieure en s'intégrant au réseau tridimensionnel du polyéthylène réticulé, ce qui permet de réduire la quantité de matière extractible dans le matériau final et de lui conserver ses propriétés mécaniques lors de son utilisation, par exemple en milieu hydrocarboné.

D'une manière générale, les compositions extrudables et réticulables de l'invention comprennent (a) une proportion majeure d'un polymère d'éthylène ou d'un copolymère dérivant de l'éthylène et d'une proportion mineure d'au moins une autre oléfine. (b) une proportion mineure convenable d'au moins un composé générateur de radicaux libres; et (c) une proportion mineure convenable d'au moins "un additif réactif de mise en oeuvre", consistant en un polymère ou un copolymère d'acrylate (s) de n-alkyle de $C_{14}$ à $C_{24}$ ayant une masse moléculaire moyenne en nombre de 500 à 50 000, de préférence de 1 000 à 20 000.

Elles peuvent comprendre en outre divers ingrédients usuels tels que par exemple des additifs antioxydants, des colorants ou des charges.

Les polymères d'éthylène haute ou moyenne densité considérés dans l'invention peuvent consister en des homopolyéthylènes haute ou moyenne densité ou en des copolymères renfermant en outre une proportion mineure d'unités dérivant d'une ou plusieurs autre(s) oléfine (s) de $C_3$ à $C_8$. Ces polymères présentent un taux de ramification, exprimé en $CH_3$ pour 1 000 atomes de carbone inférieur à 2,5.

Sous la désignation "polyéthylènes haute densité", on entend dans l'invention des polyéthylènes ayant une densité d'au moins 0,941, les "polyéthylènes moyenne densité" ayant pour leur part une densité supérieure à 0,926 (suivant la classification donnée dans ASTM D l248).

Les masses moléculaires moyennes en poids de ces polymères sont relativement élevées. Elles peuvent être par exemple de 50 000 à 700 000; elles sont plus particulièrement comprises entre 100 000 et 500 000. Ces polymères présentent en général un indice de fusion (mesuré à 190° C sous une charge de 2,12 MPa) au moins égal à 1 et pouvant aller par exemple jusqu'à 50.

Comme mentionné précédemment, on peut, sans sortir du cadre de l'invention, utiliser au lieu des polyéthylènes, des copolymères d'éthylène formés avec une proportion mineure d'au moins une autre oléfine de $C_3$ à $C_8$ , comme par exemple du propylène ou un butène. Dans ce cas, la proportion du co-monomère oléfinique est en général inférieure à 5 % en unités par rapport au copolymère final. Les autres caractéristiques des copolymères d'éthylène ainsi définis sont identiques à celles des homopolyéthylènes haute et moyenne densité considérés plus haut.

Les (co)polymères d'éthylène haute ou moyenne densité sont en général utilisés au départ du procédé sous la forme d'une poudre ou en grains.

Les composés générateurs de radicaux libres que l'on peut utiliser dans les compositions de l'invention sont ceux dont la température de décomposition se situe dans un intervalle allant de 140 à 280° C. On peut citer par exemple :

le peroxyde de dicumyle

le peroxyde de cumyl-t-butyle

le 2,5.dimethyl 2,5.di-(t-butylperoxy) hexane

le 2,5-dimethyl 2,5.di-(t-butylperoxy) hexyne-3

le peroxyde de di-t-butyle

le 33,66 99-hexamethyl - tétraoxocyclononane

le 2,2'-azo-bis-(2-acétoxy-propane)

l'ethyl-o-benzoyl-laurohydroximate

le di-t-butyl peroxy-téréphtalate

ou le 3,5-bis-(tertio-butyl peroxy) 3,5-diméthyl dioxolane-1,2.

Le composé générateur de radicaux libres est introduit dans les compositions de l'invention en une proportion usuelle, par exemple de 0,3 à 5 % en poids par rapport au poids du polymère d'éthylène.

La mise en jeu selon l'invention des additifs réactifs de mise en oeuvre permet d'effectuer l'étape d'extrusion en appareillage conventionnel et dans des conditions (débits, pressions et températures) compatibles avec les composés générateurs de radicaux libres mentionnés plus haut, en particulier à des températures telles que le générateur de radicaux libres particulier utilisé ne se décompose pas pendant l'extrusion du mélange à l'état fondu. Ainsi, suivant le générateur de radicaux libres utilisé, on pourra ajuster la proportion de polyacrylate de n-alkyle à mettre en jeu pour pouvoir extruder de façon satisfaisante à des températures inférieures à la température de décomposition du générateur de radicaux libres considéré. La proportion de polyacrylate de n-alkyle de $C_{14}$ à $C_{24}$ ira en général de 0,5 à 10 % en poids et, de préférence, de 1 à 5 % en poids, par rapport au poids de polymère d'éthylène mis en jeu.

Après l'extrusion, le matériau mis en forme est soumis aux conditions de la réticulation. En particulier, il est chauffé à une température permettant la décomposition du composé générateur de radicaux libres, entre 140 et 280° C suivant le cas. La température de réticulation est, en général, supérieure de 20 à 100° C à la température maximale de l'étape d'extrusion.

Pour faciliter la réticulation des compositions de l'invention, on peut prévoir au départ d'associer au composé générateur de radicaux libres un agent co-réticulant, tel que par exemple le cyanurate de triallyle.

On peut aussi prévoir d'introduire dans les compositions de l'invention, avant extrusion, divers ingrédients usuels, tels que les additifs anti-oxydants, des colorants ou des charges diverses (noir de carbone par exemple), en des proportions appropriées.

Les matériaux obtenus selon l'invention présentent des propriétés très satisfaisantes. En particulier, leur vieillissement à 100° C en milieu hydrocarboné fait apparaître la conservation des caracteristiques mécaniques du produit réticulé liée à la difficulté d'extraire l'agent plastifiant selon l'invention.

Leur taux de gel n'est que très peu abaissé par rapport à ceux obtenus en l'absence d'agent plastifiant.

La préparation de matériaux extrudés et réticulés selon l'invention s'applique avantageusement à la fabrication de tubes de diamètres supérieurs à 20 mm et, plus particulièrement, compris entre 75 et 300 mm.

Les exemples suivants illustrent l'invention.

Les exemples 1 à 6, 10, 12, 14, 16, 18 et 20 sont donnés à titre de comparaison.

**Exemples 1 à 9:**

(les exemples 1 à 6 sont donnés à titre de comparaison).

Dans ces exemples, on a préparé des compositions à extruder et à réticuler en utilisant comme matière thermoplastique de départ un polyéthylène haute densité de masse moléculaire comprise dans l'intervalle 300 000 à 500 000.

Ce polyéthylène, commercialisé par Phillips Petroleum sous la dénomination MARLEX 56020, présente une densité de 0,953 et un indice de fusion égal à 2 sous une charge de 2,12 MPa.

La composition des mélanges formés est indiquée au Tableau I.

Sauf pour l'échantillon n° I, auquel on n'a ajouté aucun additif, on a ajouté aux échantillons 2 à 9, 1,5 partie-poids d'éthyl-o-benzoyl,laurohydroximate (amorceur radicalaire) et 1 partie-poids de cyanurate de triallyle pour 100 parties-poids de polyéthylène.

Aux échantillons des exemples 3 à 6, on a également ajouté des proportions variées de plastifiants de l'art antérieur et aux échantillons des exemples 7 à 9, on a ajouté des proportions variées d'un additif réactif de mise en oeuvre selon l'invention. Les notations sont les suivantes :

AA : acrylate de n-alkyle.

MAA ; méthacrylate de n-alkyle PMAA : polyméthacrylate de n-alkyle ($\bar{M}_n = 4\,100$)

PAA : polyacrylate de n-alkyle ($\bar{M}_n = 2\,600$)

Dans chaque cas, le radical alkyle linéaire correspond à une coupe d'alcools dont la composition est approximativement la suivante :

Monoalcool en $C_{16}$ < 1 % en poids

$C_{18}$ < 7 % "

$C_{20}$ 52-64 "

$C_{22}$ 25-35 "

$C_{24}$ < 6 % "

$C_{26}$ < 1 % "

Le mélange des divers constituants des compositions 1 à 9 a été réalisé de manière classique au mélangeur rapide à 3 000 tours/minute, pendant 10 minutes.

On a essayé d'extruder ces compositions sur une machine GOTTFERT munie d'une vis de diamètre D = 20 mm et de longueur 20 D.

On a mis en oeuvre deux types de fonctionnement:

a) les températures dans les 3 zones du fourreau étaient: 130 - 135 - 140°C (extrusion à 140°C)

b) les températures dans les 3 zones du fourreau étaient: 150 - 155 - 160°C (extrusion à 160°C).

La vitesse de rotation de la vis de l'extrudeuse était la même dans les deux cas: 40 tours/min.

Les débits d'extrusion indiqués au Tableau I ont été calculés par la formule:

$$\text{débit (g /h. atm.)} = \frac{\text{poids de matière extrudée}}{\text{temps x pression en tête de filière}}$$

On a déterminé les taux de gel après extrusion par extraction au xylène bouillant pendant 8 heures.

Après extrusion, les mélanges ont été granulés, puis réticulés sous presse à 250°C, pendant 30 minutes sous 150 bars. Les taux de gel ont alors été déterminés comme précédemment sur les plaques obtenues. Dans les cas où l'on n'a pas pu effectuer l'extrusion, la réticulation a été réalisée sur le mélange initial.

Des résultats du Tableau I, il ressort des exemples comparatifs 3 et 4 que les acrylates ou méthacrylates monomères présentent une réactivité importante

## TABLEAU 1

| Exemple n° | Additif | Teneur (% poids) | Débit d'extrusion 140°C | 160°C g/h.atm. | Taux de gel après ex-trusion (%) | Aspect après extrusion | Taux de gel après ré-ticulation sous pres-se (%) |
|---|---|---|---|---|---|---|---|
| 1* | — | — | — | 14 | 0—1 | bon | — |
| 2 | — | — | débit très | faible | 10 à 50 | mauvais | 96 |
| 3 | AA | 1 | " " | " | 60 | mauvais | 98 |
| 4 | MAA | 1 | " " | " | 16 | mauvais | 98 |
| 5 | PMAA | 2 | 25 | 50 | 5 à 10 | mauvais | 93 |
| 6 | PMAA | 10 | 70 | 120 | 0—1 | bon | 89 |
| 7 | PAA | 1 | 30 | 60 | 0—1 | bon | 95 |
| 8 | PAA | 2 | 40 | 90 | 0—1 | bon | 95 |
| 9 | PAA | 10 | 90 | 150 | 0—1 | bon | 93 |

* MARLEX 56020 en l'absence d'initiateur de radicaux libres.

lors de l'étape d'extrusion (les taux de gel après extrusion vont de 15 à 60 %).

Les exemples comparatifs 5 et 6, mis en regard des exemples 8 et 9, montrent que l'emploi d'un polyméthacrylate d'alkyle produit un effet plastifiant inférieur à celui obtenu avec les mêmes concentrations de polyacrylates d'alkyle ainsi qu'une réduction sensible du taux de gel après réticulation.

## Exemples 10 à 19:

(les exemples 10, 12, 14, 16 et 18 sont données à titre de comparaison).

Dans ces exemples, on a utilisé plusieurs polyéthylènes ayant des densités différentes (à partir de 0,938) ainsi que des indices de fusion (sous 2,12 MPa à 190° C) différents (de 2 à 20).

L'additif réactif de mise en oeuvre, conforme à l'invention était un polyacrylate de n-alkyle de masse moléculaire moyenne en nombre de 9 700 dont la partie alkyle linéaire correspond à une coupe d'alcools dont la composition approximative est la suivante :

Monoalcool en $C_{14}$ < 2 % en poids
$C_{16}$   47- 55 "
$C_{18}$   26-34 "
$C_{20}$   10-18 "
$C_{22}$ <  3 "

On a utilisé plusieurs générateurs de radicaux libres différents.

Dans deux formulations comparables (exemples 12 et 13) on a incorporé une charge de noir de carbone dont les caractéristiques étaient les suivantes :

surface spécifique BET ($N_2$) 1 000 $m^2$/g
volume des vides (DBP) 340 ml/100 g
dimensions des particules 30 m̄M

Comme dans les exemples 1 à 9, on a effectué l'extrusion à deux températures différentes (140 et 160° C) pour chaque formulation.

La réticulation des échantillons des exemples 10 à 15 a été effectuée sous presse à 250°C pendant 20 minutes, alors que pour la réticulation des échantillons des exemples 16 à 19, la température était de 200° C.

La composition des différentes formulations est indiquée au Tableau 2, ainsi que les observations et résultats concernant chaque expérimentation.

Dans tous les cas, il apparaît que l'introduction du polyacrylate décrit précédemment permet d'augmenter le débit de l'extrusion sans provoquer une diminution trop importante du taux de gel après l'étape ultérieure de réticulation.

**TABLEAU 2**

| Exemple n° | Polyéthylène | | Générateur de radicaux | | Teneur en noir (% poids) | Teneur PAA (% poids) | Débit d'extrusion | | Taux de gel après réticulation sous presse (%) |
|---|---|---|---|---|---|---|---|---|---|
| | densité | Indice de fusion* | nom | teneur (% poids) | | | 140°C | 160°C | |
| | | | | | | | g/h.atm. | | |
| 10 | 0,961 | 20 | éthyl-o.-benzoyl lauro-hydroxymate | 1,5 | 0 | 0 | 90 | 110 | 80 |
| 11 | " | " | " | " | 0 | 2 | 150 | 190 | 80 |
| 12 | " | " | " | " | 2 | 0 | débit irrégulier et faible | | 79 |
| 13 | " | " | " | " | 2 | 2 | 70 | 100 | 78 |
| 14 | 0,953 | 2 | 2,2-azo-bis-(2-acétoxy-propane) | 0,5 | 0 | 0 | ne s'extrude pas | | — |
| 15 | " | " | " | " | 0 | 2 | 30 | 90 | 85 |
| 16 | 0,945 | 9 | 2,5-dimethyl 2,5-di-(t-butyl peroxy)-hexane | 0,5 | 0 | 0 | ne s'extrude pas | | — |
| 17 | " | " | " | " | 0 | 1 | 15 | 40 | 87 |
| 18 | 0,938 | 20 | " | 0,5 | 0 | 0 | ne s'extrude pas | | — |
| 19 | " | " | " | " | 0 | 0,5 | 30 | 65 | 86 |

* sous 2,12 MPa

**Exemples 20 à 26:**

(l'exemple 20 est donné à titre de comparaison).

Dans ces exemples, on a utilisé à différentes concentrations des polyacrylates de n-alkyle de masses moléculaires moyennes en nombre variées, comprises entre 2 000 et 20 000. pour chaque polyacrylate, la partie alkyle correspondait à la même coupe de monoalcools linéaires que celle considérée dans les additifs des exemples 3 à 9.

On a utilisé également le même polyéthylène haute densité que dans les exemples 1 à 9 (MARLEX 56 020 de Phillips Petroleum), ainsi que, comme générateur de radicaux libres l'éthyl-o-laurohydroximate, à raison de 1,5 parties en poids pour 100 parties en poids de polyéthylène.

L'extrusion a été effectuée à température maximale de 160° C et la réticulation a été effectuée sous presse à 250° C pendant 30 minutes.

Les résultats indiqués au Tableau 3 montrent que l'additif devient plus particulièrement efficace pour des teneurs d'au moins 1 % en poids. Pour des teneurs voisines de 5 % en poids, dans les conditions de réticulation mises en oeuvre, le taux de gel ne se trouve pas réduit.

**TABLEAU 3**

| Exemple n° | Teneur PAA (% poids) | $\overline{M}_n$ | Débit d'extrusion à 160°C (g/h.atm.) | Aspect après extrusion | Taux de gel après réticulation sous presse |
|---|---|---|---|---|---|
| 20 | 0 | — | ne s'extrude pas | mauvais | |
| 21 | 0,5 | 2 600 | 20 | moyen | 85 |
| 22 | 1 | " | 80 | bon | 83 |
| 23 | 2 | " | 110 | bon | 81 |
| 24 | 5 | " | 180 | bon | 80 |
| 25 | 2 | 9 700 | 105 | bon | 82 |
| 26 | 2 | 18 000 | 95 | bon | 81 |

## Revendications

1.- Composition extrudable et réticulable caractérisée en ce qu'elle comprend :

a) une proportion majeure d'une polyoléfine consistant en un polyéthylène de haute densité (au moins 0,941) ou de moyenne densité (plus de 0,926) ou en un copolymère dérivant de l'éthylène et d'une proportion inférieure à 5% en unités d'une oléfine de $C_3$ à $C_8$;

b) une proportion de 0,3 à 5% en poids par rapport à ladite polyoléfine d'au moins un composé générateur de radicaux libres, et

c) une proportion de 0,5 à 10% en poids par rapport à ladite polyoléfine d'au moins un polymère d'acrylate de n-alkyle de $C_{14}$ à $C_{24}$ ayant une masse moléculaire moyenne en nombre de 500 à 50 000.

2.- Composition selon la revendication 1, caractérisée en ce que ladite polyoléfine consiste en un polyéthylène de haute ou moyenne densité ayant une masse moléculaire moyenne de 50 000 à 700 000.

3.- Composition selon la revendication 1 ou 2, caractérisée en ce que ladite polyoléfine présente un taux de ramification inférieur à 2,5 groupements $CH_3$ pour 1 000 atomes de carbone.

4. - Composition selon l'une des revendications 1 à 3, caractérisée en ce que ledit composé générateur de radicaux libres a une température de décomposition dans l'intervalle de 140 à 280° C.

5.- Composition selon l'une des revendications 1 à 4, caractérisée en ce que ledit polyacrylate de n-alkyle présente une masse moléculaire moyenne en nombre de 1 000 à 20 000.

6. - Composition selon l'une des revendications 1 à 5, caractérisée en ce que la proportion dudit polyacrylate de n-alkyle est de 1 à 5 % en poids par rapport au poids de la polyoléfine.

7. - Composition selon l'une des revendications 1 à 6, caractérisée en ce qu'elle comprend en outre une proportion mineure d'un agent co-réticulant.

8. - Composition selon l'une des revendications 1 à 7, caractérisée en ce qu'elle comprend en outre au moins un ingrédient choisi parmi les additifs anti-oxydants, les colorants et diverses charges.

9.- Procédé de fabrication d'un matériau extrudé et réticulé caractérisé en ce qu'il comprend une première étape dans laquelle on effectue l'extrusion d'une composition selon l'une des revendications 1 à 8, en opérant à des températures inférieuree à la température de décomposition du composé générateur de radicaux libres; et une seconde étape dans laquelle on soumet le produit extrudé à une température au moins égale à la température de décomposition du composé générateur de radicaux libres.

10.- Produit extrudé et réticulé obtenu par un procédé selon la revendication 9.

11.- Produit extrudé et réticulé selon la revendication 10, consistant en un tube de grand diamètre.

## Patentansprüche

1. Extrudierbare und vernetzbare Zusammensetzung, dadurch gekennzeichnet, daß sie enthält:

a) einen größeren Mengenanteil eines Polyolefins, das aus einem Polyäthylen hoher Dichte (mindestens 0,941) oder mittlerer Dichte (mehr als 0,926) oder einem Copolymeren, das von Äthylen und einem Mengenanteil von unterhalb 5 % an Einheiten eines $C_3$ bis $C_8$-Olefins abgeleitet ist, besteht;

b) einem Mengenanteil von 0,3 bis 5 Gew.-%, bezogen auf dieses Polyolefin an zumindest einer Verbindung, die freie Radikale erzeugt, und

c) einem Mengenanteil von 0,5 bis 10 Gew.-%, bezogen auf das Polyolefin an zumindest einem $C_{14}$ bis $C_{24}$-n-Alkylacrylatpolymeren mit einem mittleren Zahlendurchschnittsmolekulargewicht von 500 bis 50 000.

2. Zusammensetzung nach Anspruch 1, dadurch gekennzeichnet, daß dieses Polyolefin aus einem Polyäthylen hoher oder mittlerer Dichte mit einem Durchschnittmolekulargewicht von 50 000 bis 700 000 besteht.

3. Zusammensetzung nach Anspruch 1 oder 2, dadurch gekennzeichnet, daß das Polyolefin einen Verzweigungsgrad von unterhalb 2,5 $CH_3$-Gruppen pro 1 000 Kohlenstoffatomen aufweist.

4. Zusammensetzung nach einem der Ansprüche 1 bis 3, dadurch gekennzeichnet, daß die freie Radikale erzeugende Verbindung eine Zersetzungstemperatur im Bereich von 140 bis 280° C hat.

5. Zusammensetzung nach einem der Ansprüche 1 bis 4, dadurch gekennzeichnet, daß das Poly-n-alkylacrylat ein Zahlendurchschnittsmolekulargewicht von 1 000 bis 20 000 aufweist.

6. Zusammensetzung nach einem der Ansprüche 1 bis 5, dadurch gekennzeichnet, daß der Mengenanteil dieses Poly-n-alkylacrylats 1 bis 5 Gew.-%, bezogen auf das Gewicht des Polyolefins, beträgt.

7. Zusammensetzung nach einem der Ansprüche 1 bis 6, dadurch gekennzeichnet, daß sie außerdem einen kleineren Mengenanteil an einem Covernetzungsmittel enthält.

8. Zusammensetzung nach einem der Ansprüche 1 bis 7, dadurch gekennzeichnet, daß sie außerdem zumindest einen Bestandteil enthält, der aus Antioxidationszusätzen, Färbemitteln und verschiedenen Füllstoffen gewählt ist.

9. Verfahren zur Herstellung eines extrudierten und vernetzten Materials, dadurch gekennzeichnet, daß es eine erste Stufe umfaßt, worin man die Extrusion einer Zusammensetzung nach einem der Ansprüche 1 bis 8 bewirkt, wobei man bei Temperaturen unterhalb der Zersetzungstemperatur der freie Radikale erzeugenden Verbindung arbeitet und eine zweite Stufe, worin man das extrudierte Produkt einer Temperatur unterwirft, die zumindest gleich der Zersetzungstemperatur der freie Radikale erzeugenden Verbindung ist.

# 0 087 344

10. Extrudiertes und vernetztes Produkt, erhalten nach einem Verfahren gemäß Anspruch 9.

11. Extrudiertes und vernetztes Produkt nach Anspruch 10, dadurch gekennzeichnet, daß es aus einem Rohr mit großem Durchmesser besteht.

## Claims

I. - An extrudable and crosslinkable composition characterized in that it comprises :

a) - a major proportion of a polyolefin consisting of a high density (at least 0.941) or an average density (more than 0.926) polyethylene or of a copolymer deriving from ethylene and from a $C_3$ to $C_8$ olefin in a proportion lower than 5 % by units,

b) - a proportion of 0.3 to 5 % b.w. with respect to said polyolefin of at least one free radicals generator compound, and

c) - a proportion of 0.5 to 10 % b.w. with respect to said polyolefin of at least one $C_{14}$ to $C_{24}$ n-alkyl acrylate polymer having an average molecular weight by number of 500 to 50,000.

2. - A composition according to claim I, characterized in that said polyolefin consists of a high- or average density polyethylene having an average molecular weight of 50,000 to 700,000.

3. - A composition according to claim 1 or 2, characterized in that said polyolefin has a branching rate lower than 2.5 $CH_3$ groups per 1,000 carbon atoms.

4. - A composition according to one of claims 1 to 3, characterized in that said free radicals generator compound has a decomposition temperature ranging from 140 to 280° C.

5. - A composition according to one of claims 1 to 4, characterized in that said n-alkyl polyacrylate has an average molecular weight by number from 1,000 to 20,000.

6. - A composition according to one of claims 1 to 5, characterized in that the proportion of said n-alkyl polyacrylate is from 1 to 5 % by weight with respect to the polyolefin weight.

7. - A composition according to one of claims 1 to 6, characterized in that it further comprises a minor proportion of co-crosslinking agent.

8. - A composition according to one of claims 1 to 7, characterized in that it further comprises at least one material selected from the anti-oxidant additives, dyestuffs and various fillers.

9. - A process for manufacturing an extruded and cross-linked material, characterized in that it comprises a first step of extruding a composition according to one of claims 1 to 8, at temperature lower than the decomposition temperature of the free radicals generator compound, and a second step of subjecting the extruded product to a temperature at least equal to the decomposition temperature of the free radicals generator compound.

10.- An extruded and cross-linked product obtained by the process according to claim 9.

11.- An extruded and cross-linked product according to claim 10, consisting of a pipe of large diameter.